(19) Europäisches Patentamt
European Patent Office
Office européen des brevets

(11) EP 1 625 792 B1

(12) **EUROPEAN PATENT SPECIFICATION**

(45) Date of publication and mention of the grant of the patent:
**06.06.2007 Bulletin 2007/23**

(21) Application number: **05254958.1**

(22) Date of filing: **09.08.2005**

(51) Int Cl.:
***A01N 53/00*** *(2006.01)*

(54) **Pesticidal composition**

Pestizide Zusammensetzung

Composition pesticide

(84) Designated Contracting States:
**DE ES FR GB IT**

(30) Priority: **11.08.2004 JP 2004234218**

(43) Date of publication of application:
**15.02.2006 Bulletin 2006/07**

(73) Proprietor: **Sumitomo Chemical Company, Limited**
**Tokyo 104-8260 (JP)**

(72) Inventor: **Sembo, Satoshi**
**Nishinomiya-shi**
**Hyogo (JP)**

(74) Representative: **Duckworth, Timothy John et al**
**J.A. Kemp & Co.**
**14 South Square**
**Gray's Inn**
**London WC1R 5JJ (GB)**

(56) References cited:
**EP-A- 0 345 775**
**EP-A- 0 926 129**
**EP-A- 0 939 073**
**EP-A- 1 004 569**
**US-A- 5 478 855**

- **DATABASE WPI Section Ch, Week 200172 Derwent Publications Ltd., London, GB; Class C02, AN 2001-620275 XP002356940 & JP 2001 206807 A (SUMITOMO CHEM CO LTD) 31 July 2001 (2001-07-31)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 625 792 B1

## Description

Field of the Invention

The present invention relates to a pesticidal composition and a method for controlling a pest.

Background Arts

The ester compound of the formula (1):

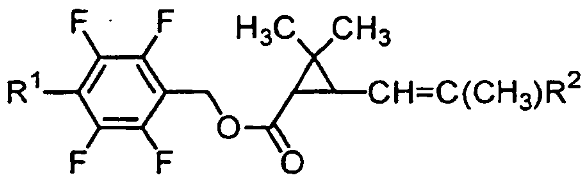

(1)

wherein $R^1$ represents a methyl group or methoxymethyl group and $R^2$ represents a hydrogen atom or methyl group, is known as an active ingredient of a pesticidal composition in USP-6,225,495, USP-6,294,576 and EP-926129B.

Further, the oxazoline compound of the formula (2):

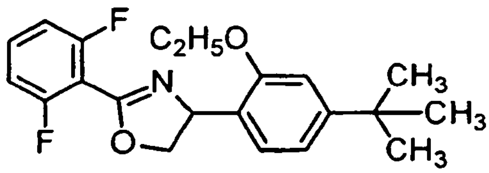

(2)

(common name: etoxazole, 2-(2,6-difluorophenyl)-4-[4-(1,1-dimethylethyl)-2-ethoxyphenyl]-4,5-dihydrooxazole) is known as an active ingredient of an insecticidal/acaricidal composition in USP-5,478,855, USP-4,977,171 and JP 2001-206807A.

Disclosure of the Invention

The present invention provides a new pesticidal composition having an excellent pesticidal activity.

The invention provides a pesticidal composition comprising the ester compound of the formula (1) and the oxazoline compound of the formula (2) as active ingredients. It has an excellent pesticidal efficacy against pests by its synergistic action.

Thus, the present invention provides a synergistic composition, namely a pesticidal composition which comprises an ester compound of the formula (1):

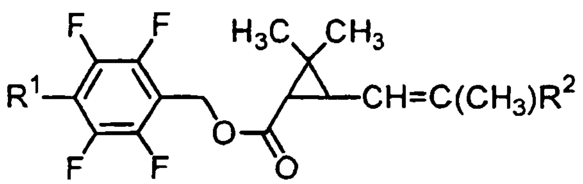

(1)

wherein $R^1$ represents a methyl group or methoxymethyl group and $R^2$ represents a hydrogen atom or methyl group, and an oxazoline compound of the formula (2):

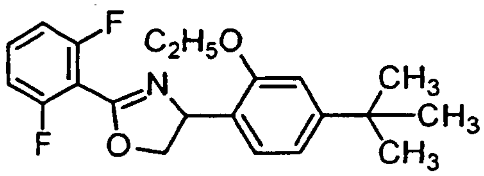

(2)

as active ingredients, wherein the weight ratio of the ester compound of the formula (1) and the oxazoline compound of the formula (2) is 30:1 to 1:30 and a method for controlling a pest by synergistic action, namely a method for controlling a pest which comprises applying an effective amount of an ester compound of the formula (1):

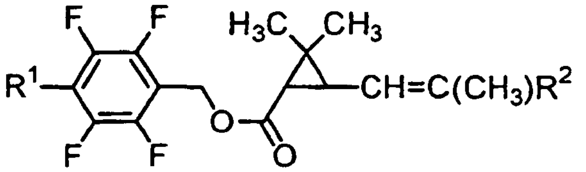

(1)

wherein $R^1$ represents a methyl group or methoxymethyl group and $R^2$ represents a hydrogen atom or methyl group, and an oxazoline compound of the formula (2):

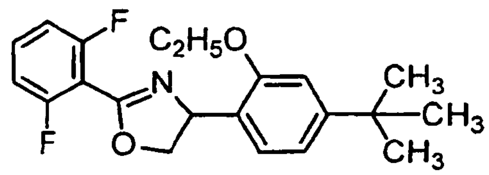

(2)

wherein the weight ratio of the ester compound of the formula (1) and the oxazoline compound of the formula (2) is 30: 1 to 1:30 to the pest or a place where the pest inhabits.

The ester compound of the formula (1) is described in USP-6,225,495, USP-6,294,576 and EP-926129B, and can be produced by the methods disclosed in the documents.

The ester compound of the formula (1) has optical isomers based on the asymmetric carbon atoms and geometrical isomers based on the cyclopropane ring and carbon-carbon double bond, and the present invention encompasses any active isomers.

Examples of the compound of the formula (1) include 2,3,5,6-tetrafluoro-4-methoxymethylbenzyl 3-(1-propenyl)-2,2-dimethylcyclopropanecarboxylate, 2,3,5,6-tetrafluoro-4-methylbenzyl 3-(1-propenyl)-2,2-dimethylcyclopropanecarboxylate, 2,3,5,6-tetrafluoro-4-methoxymethylbenzyl 3-(2-methyl-1-propenyl)-2,2-dimethylcyclopropanecarboxylate, 2,3,5,6-tetrafluoro-4-methoxymethylbenzyl 1R-trans-3-(1-propenyl)-2,2-dimethylcyclopropanecarboxylate, 2,3,5,6-tetrafluoro-4-methylbenzyl 1R-trans-3-(1-propenyl)-2,2-dimethylcyclopropanecarboxylate, 2,3,5,6-tetrafluoro-4-methoxymethylbenzyl 1R-trans-3-(2-methyl-1-propenyl)-2,2-dimethylcyclopropanecarboxylate, 2,3,5,6-tetralluoro-4-methoxymethylbenzyl 1R-trans-3-(1-propenyl (E/Z=1/8))-2,2-dimethylcyclopropanecarboxylate, 2,3,5,6-tetrafluoro-4-methylbenzyl 1R-trans-3-(1-propenyl (E/Z=1/8))-2,2-dimethylcyclopropanecarboxylate and 2,3,5,6-tetrafluoro-4-methoxymethylbenzyl 1R-trans-3-(2-methyl-1-propenyl)-2,2-dimethylcyclopropanecarboxylate.

The oxazoline compound of the formula (2) is a compound described in USP-5,478,855, and can be produced by the method disclosed in the document.

Examples of the pest controlled by the pesticidal composition of the present invention include arthropods such as harmful insects and acarina and harmful nematode. Typical examples are the following:

Hemipteran pests: Delphacidae (planthoppers) such as *Laodelphax striatellus* (small brown planthopper), *Nilaparvata lugens* (brown planthopper) and *Sogatella furcifera* (white-backed rice planthopper);
Deltocephalidae (leafhoppers) such as *Nephotettix cincticeps* and *Nephotettix virescens;* Aphididae (aphids); plant bugs; Aleyrodidae (whiteflies); Coccidae (scales); Tingidae (lace bugs) and Psyllidae.
Lepidopteran pests: Pyralidae such as *Chilo suppressalis* (rice stem borer), *Cnaphalocrocis medinalis* (rice leafroller) and *Plodia interpunctella* (Indian meal moth); Hadeninae such as *Spodoptera litura* (tobacco cutworm), *Pseudaletia separata* (rice armyworm) and Mamestra brassicae (cabbage armyworm), Plusiinae, *Agrotis spp.* such as *Agrotis segetum* and *Agrotis ipsilon*); *Helicoverpa spp.; Heliothis spp.*; Pieridae such as *Pieris rapae crucivora*; Tortricidae such as *Adoxophyes spp.;* Carposinidae; Lyonetiidae; Lymantriidae; *Plutella xylostella* (diamondback moth); *Par-*

*nara guttata* (rice skipper); *Tinea transluscens* (casemaking clothes moth) and *Tineola bisselliella* (webbing clothes moth).

Dipteran pests: *Culex spp.* such as *Culex pipiens pallens* and *Culex tritaeniorhynchus*; *Aedes spp.* such as *Aedes aegypti* and *Aedes albopictus; Anopheles spp.* such as *Anopheles sinensis;* Chironomidae (midges); Muscidae such *Musca domestica* and *Muscina stabulans; Fannia canicularis*; Calliphoridae; Sarcophagidae; Anthomyiidae such as *Delia platura* (seedcorn maggot) and *Delia antique* (onion maggot); Tephritidae (fruit flies); Drosophilidae (vinegar flies); Psychodidae; Tabanidae; Simuliidae and Stomoxylidae (stable flies).

Coleopteran pests: corn rootworms such as *Diabrotica virgifera* (western corn rootworm) and *Diabrotica undecimpunctata howardi* (southern corn rootworm); Scarabaeidae such as *Anomala cuprea* and *Anomala rufocuprea* (soybean beetle); weevils such as *Sitophilus zeamais* (maize weevil), *Lissorhoptrus oryzophilus* (ricewater weevil), *Anthonomous grandis* (bollweevil) and *Callosobruchus chinensis* (adzuki bean weevil); Tenebrionidae such as *Tenebrio militor* and *Tribolium castaneum*; Chrysomelidae (leaf beetles) such as *Oulema oryzae* (rice leaf beetle), *Phyllotreta striolata* (striped flea beetle) and *Aulacophora femoralis* (cucurbit leaf beetle); Anobiidae; *Epilachna spp.* such as *Epilachna vigintioctopunctata;* Lyctidae (powderpost beetles); Bostrychidae; Cerambycidae and *Paederus fuscipes* (robe beetle).

Dictyopteran pests: *Blattella germanica* (German cockroach), *Periplaneta fuliginosa* (smokybrown cockroach), *Periplaneta Americana* (American cockroach), *Periplaneta brunnea* (brown cockroach) and *Blatta orientalis* (oriental cockroach).

Thysanopteran pests: *Thrips palmi, Flankliniella occidentalis* (western flower thrips) and *Thrips ha waiiensis* (flower thrips).

Hymenopteran pests: Formicidae (ants), Vespidae (hornets), Bethylidae and Tenthredinidae (sawflies) such as *Athalia rosae ruficornis.* Orthopteran pests: Gryllotalpidae (mole crickets) and Acrididae (grasshoppers).

Siphonapteran pests: *Pulex irritans* (human flea) and *Ctenocephalides felis* (cat flea).

Anopluran pests: *Pediculus humanus* (human body louse), *Pthirus pubis* (crab louse) and *Haematopinus eurysternus* (cattle louse).

Isopteran pests: *Reticulitermes speratus* and *Coptotermes formosanus.* Acarina: Dermanyssidae such as *Dermatophagoides farinae* and *Dermatophagoides pteronyssinus*; Acaridae such as *Tyrophagus putrescentiae* and *Aleuroglyphus ovatus*; Glycyphagidae such as *Glycyphagus privates, Glycyphagus domesticus* and *Glycyphagus destructor*; Cheyletidae such as *Chelacaropsis malaccensis* and *Cheyletus fortis*; Tarsonemidae; *Chortoglyphus spp.*; *Haplochthonius spp.*; Varroidae such as *Varroa jacobsoni* (bee brood mite); Tetranychidae (spider mites) such as *Tetranychus urticae* (two-spotted spider mite), *Tetranychus kanzawai, Panonychus citri* (citrus red mite) and *Panonychus ulmi* (European red mite); Ixodidae such as *Haemaphysalis longiconis* and *Boophilus microplus*; *Dermanyssus spp.* such as *Dermanyssus gallinae* (chicken mite) and Macronyssidae such as *Ornithonyssus sylviarum.*

In the pesticidal composition of the present invention, the mixing ratio of the ester compound of the formula (1) and the oxazoline compound of the formula (2) is 30:1 to 1:30, preferably 30:1 to 1:10, more preferably 10:1 to 1:10 by weight.

The pesticidal composition may be a mixture of the ester compound of the formula (1) and the oxazoline compound of the formula (2) itself, and further can be mixed with a solid carrier, liquid carrier, gaseous carrier and/or bait component (base material for poison bait) and optionally surfactant, the other auxiliaries for formulation to give an oil solution, emulsifiable concentrate, wettable powders, flowables, granules, dusts, aerosol, vaporizing formulation for heating (e.g. mosquito coil), smoking, fogging, poison bait, microcapsule formulation, ULV formulation, spot-on formulation, pour-on formulation, shampoo formulation, sheet formulation, resin formulation and so on.

These formulations usually contain 0.01 to 90% by weight of the total amount of the ester compound of the formula (1) and the oxazoline compound of the formula (2).

Examples of the solid carrier include fine powders and granules of clays such as kaolin clay, diatomaceous earth, silicon dioxide, bentonite, Fubasami clay and terra alba; talc; ceramic; the other inorganic minerals such as sericite, quartz, sulfur, activated carbon, calcium carbonate and synthetic hydrated silica; and chemical fertilizer such as ammonium sulfate, ammonium phosphate, ammonium nitrate, urea and ammonium chloride.

Examples of the liquid carrier include water; alcohols such as methanol and ethanol; ketones such as acetone and methyl ethyl ketone; aromatic hydrocarbons such as toluene, xylene, ethylbenzene and methylnaphthalene; aliphatic hydrocarbons such as hexane, cyclohexane, kerosene and gas oil; esters such as ethyl acetate and butyl acetate; nitriles such as acetonitrile and isobutyronitrile; ethers such as diisopropyl ether and dioxane; acid amides such as N,N-dimethylformamide and N,N-dimethylacetamide; halogenated hydrocarbons such as dichloromethane, trichloroethane and carbon tetrachloride; dimethyl sulfoxide; and vegetable oils such as soybean oil and cottonseed oil.

Examples of the gaseous carrier (propellant) include fluorocarbon, butane gas, LPG (liquefied petroleum gas), dimethyl ether and carbon oxide.

Examples of the surfactant include alkyl sulfate salts, alkylsulfonate salts, alkylarylsulfonate salts, alkylaryl

ethers, polyoxyethylenated alkylaryl ethers, polyethylene glycol ethers, polyvalent alcohol esters and sugar alcohol derivatives.

Examples of the other auxiliary for formulation include sticking agents, dispersing agents and stabilizers, typically casein, gelatin, polysaccharide (e.g. starch, gum arabic, cellulose derivative, alginic acid), lignin derivatives, bentonite, sugars, synthetic water-soluble polymers (e.g. polyvinyl alcohol, polyvinylpyrrolidone, polyacrylic acid), PAP (isopropyl acid phosphate), BHT (2,6-di-tert-butyl-4-methylphenol), BHA (a mixture of 2-tert-butyl-4-methoxyphenol and 3-tert-butyl-4-methoxyphenol), vegetable oils, mineral oils, fatty acids and fatty acid esters.

Examples of the base material for poison bait include bait components such as cereal powders, vegetable oils, sugars and crystalline cellulose; antioxidants such as BHT and nordihydroguaiaretic acid; preservatives such as dehydroacetic acid; agents for preventing erroneous feeding by children or pets such as green pepper powders; pest-attracting flavors such as cheese flavor, onion flavor and peanut oil.

Examples of the base material for the resin formulation include polyvinyl chloride and polyurethane. These materials may further contain a plasticizer such as phthalates (e.g. dimethyl phthalate, dioctyl phthalate), adipates and stearic acid. The resin formulation can be obtained by mixing the ester compound of the formula (1) and the oxazoline compound of the formula (2) and kneading them with a conventional kneading apparatus and then molding by injection, extrusion and pressing, and optionally to form into a resin formulation such as plate, film, tape, net, string by a process such as forming and cutting. These resin formulations can be animal collar, ear tag for animals, sheet formulation, attracting string and support pole for horticulture.

Furthermore, the pesticidal composition can also be produced by mixing a formulation of the ester compound of the formula (1) and a formulation of the oxazoline compound of the formula (2) in some types of the formulation. It may be mixed at the time of the application.

The method for controlling pests of the present invention can usually be carried out by applying the pesticidal composition to the pests directly and/or to a place the pests inhabit, and further, it is also possible to apply the ester compound of the formula (1) or its formulation and the oxazoline compound of the formula (2) or its formulation simultaneously without mixing in advance.

The ratio of the ester compound of the formula (1) and the oxazoline compound of the formula (2) used for the method is 30:1 to 1:30, preferably 30:1 to 1:10, more preferably 10:1 to 1:10 by weight.

When the pesticidal composition of the present invention is used for controlling pests in agriculture and forestry, the application dosage is usually 1 to 10000g/ha, preferably 10 to 500g/ha of the total amount of the ester compound of the formula (1) and the oxazoline compound of the formula (2). Emulsifiable concentrate, wettable powders, flowables, microcapsule formulation and so on are usually applied after diluting with water to make the concentration of the active ingredients 1 to 1000ppm and applied; on the other hand dusts and granules are usually applied as they are. The pests which inhabit in the soil can be controlled by applying these formulations to the soil. These formulations are also applied to the nurseries before planting and applied to the hole for planting or the part near the root at the time of planting. Further, the sheet formulation of the present invention can be applied by the methods such as wrapping the stem, setting near the plant and spreading on the soil near the root.

When the pesticidal composition of the present invention is used for controlling pests in hygiene, the application dosage is usually 0.001 to 100mg/$m^3$ in the space and 0.01 to 1000mg/$m^2$ on the surface of the total amount of the ester compound of the formula (1) and the oxazoline compound of the formula (2). Emulsifiable concentrate, wettable powders, flowables and so on are usually diluted with water to make the concentration of the active ingredients 0.01 to 10000ppm and applied; on the other hand oil solution, aerosol, smoking and poison bait are usually applied as they are.

When the pesticidal composition of the present invention is used for controlling ectoparasites of cattle such as ox, sheep, goat and chicken and small animals such as dog, cat, rat and mouse, it can be applied to the animals by the methods known in veterinary. Typical methods are application of tablet, mixing with feed, suppository and injection (intermuscular, hypodermic, intravenous, endoceliac, etc.) for systemic control and spraying of oil solution or aqueous liquid formulation, pour-on or spot-on application, washing an animal with shampoo formulation, setting collar or ear tag of the resin formulation with an animal. The amount of the pesticidal composition of the present invention is usually 0.1 to 1000mg of the total amount of the ester compound of the formula (1) and the oxazoline compound of the formula (2) per 1kg of the weight of the animal when it is applied to the animal body.

The pesticidal composition of the present invention can be used together with another insecticide, nematocide, acaricide, fungicide, herbicide, plant growth regulator, synergist, fertilizer, soil-improving agent, animal food and so on.

## Examples

Hereinafter, the present invention is explained by formulation examples and test examples; however, the present invention is not restricted to these examples.

Formulation example 1

Two and a half (2.5) parts by weight of 2,3,5,6-tetrafluoro-4-methoxymethylbenzyl 1R-trans-3-(1-propenyl (E/Z=1/8))-2,2-dimethylcyclopropanecarboxylate, 2,3,5,6-tetrafluoro-4-methylbenzyl 1R-trans-3-(1-propenyl (E/Z=1/8))-2,2-dimethylcyclopropanecarboxylate or 2,3,5,6-tetrafluoro-4-methoxymethylbenzyl 1R-trans-3-(2-methyl-1-propenyl)-2,2-dimethylcyclopropanecarboxylate, 2.5 parts by weight of the oxazoline compound of the formula (2), 10 parts by weight of Sorpol SM200 (surfactant produced by Toho Chemical) and 85 parts by weight of xylene are mixed to give an emulifiable concentrate.

Formulation example 2

Two and a half (2.5) parts by weight of 2,3,5,6-tetrafluoro-4-methoxymethylbenzyl 1R-trans-3-(1-propenyl (E/Z=1/8))-2,2-dimethylcyclopropanecarboxylate, 2,3,5,6-tetrafluoro-4-methylbenzyl 1R-trans-3-(1-propenyl (E/Z=1/8))-2,2-dimethylcyclopropanecarboxylate or 2,3,5,6-tetrafluoro-4-methoxymethylbenzyl 1R-trans-3-(2-methyl-1-propenyl)-2,2-dimethylcyclopropanecarboxylate, 2.5 parts by weight of the oxazoline compound of the formula (2), 25 parts by weight of methyl oleate and 70 parts by weight of liquid paraffin are mixed to give a pour-on formulation.

Formulation example 3

Three (3) parts by weight of 2,3,5,6-tetrafluoro-4-methoxymethylbenzyl 1R-trans-3-(1-propenyl (E/Z=1/8))-2,2-dimethylcyclopropanecarboxylate, 2,3,5,6-tetrafluoro-4-methylbenzyl 1R-trans-3-(1-propenyl (E/Z=1/8))-2,2-dimethylcyclopropanecarboxylate or 2,3,5,6-tetrafluoro-4-methoxymethylbenzyl 1R-trans-3-(2-methyl-1-propenyl)-2,2-dimethylcyclopropanecarboxylate, 1.5 parts by weight of the oxazoline compound of the formula (2), 1 part by weight of fine powder of synthetic hydrated silica, 1 part by weight of Driless B (produced by Sankyo) and 7 parts by weight of clay are mixed well in a mortar, and then stirred with juice mixer. To the obtained mixture, 86.5 parts by weight of clay whose particle size was arranged are added and mixed well under stirring to give dusts.

Formulation example 4

An acetone solution (12.5ml) containing each of 1w/v% of 2,3,5,6-tetrafluoro-4-methoxymethylbenzyl 1R-trans-3-(1-propenyl (E/Z=1/8))-2,2-dimethylcyclopropanecarboxylate, 2,3,5,6-tetrafluoro-4-methylbenzyl 1R-trans-3-(1-propenyl (E/Z=1/8))-2,2-dimethylcyclopropanecarboxylate or 2,3,5,6-tetrafluoro-4-methoxymethylbenzyl 1R-trans-3-(2-methyl-1-propenyl)-2,2-dimethylcyclopropanecarboxylate, and the oxazoline compound of the formula (2) is spread on $1m^2$ of craft paper uniformly and dried to give a sheet formulation.

Test example 1

An acetone solution (0.25ml) containing each of 0.04/0.04 w/v% of 2,3,5,6- tetrafluoro-4-methoxymethylbenzyl 1R-trans-3-(1-propenyl (E/Z=1/8))-2,2-dimethylcyclopropanecarboxylate and the oxazoline compound of the formula (2) was spread on a round shape (35mm in diameter) of wool muslin (100mg of each compound per $1m^2$ of wool muslin) and dried. The wool muslin was set in a Petri dish (35mm in diameter, 10mm in height), 10 larvae (5-6 week-aged) of webbing clothes moth (*Tineola bisselliella*) were released in the Petri dish, and the Petri dish was put the lid on and kept at 25°C and 60% in humidity for 7 days. After that, the mortality was observed and found to be 100%. (two repetitions)

Test example 2

An acetone solution (0.25ml) containing each of 0.04/0.04 w/v% of 2,3,5,6- tetrafluoro-4-methylbenzyl 1R-trans-3-(1-propenyl (E/Z=1/8))-2,2-dimethylcyclopropanecarboxylate and the oxazoline compound of the formula (2) was spread on a round shape (35mm in diameter) of wool muslin (100mg of each compound per $1m^2$ of wool muslin) and dried. The wool muslin was set in a Petri dish (35mm in diameter, 10mm in height), 10 larvae (5-6 week-aged) of webbing clothes moth (*Tineola bisselliella*) were released in the Petri dish, and the Petri dish was put the lid on and kept at 25°C and 60% in humidity for 7 days. After that, the mortality was observed and found to be 100%. (two repetitions)

Test example 3

Five grams (5.0g) of 2,3,5,6-tetraffuoro-4-methoxymethylbenzyl 1R-trans-3-(1-propenyl (E/Z=1/8))-2,2-dimethylcyclopropanecarboxylate, 2.5g of the oxazoline compound of the formula (2), 10g of Sorpol 3005X (surfactant produced by Toho Chemical), 40g of N,N-dimethylformamide and 42.5g of xylene were mixed to give an emulsifiable concentrate

of the present invention (EC 1) for the test.

Five grams (5.0g) of 2,3,5,6-tetrafluoro-4-methoxymethylbenzyl 1R-trans-3-(1-propenyl (E/Z=1/8))-2,2-dimethylcyclopropanecarboxylate, 10g of Sorpol 3005X (surfactant produced by Toho Chemical), 40g of N,N-dimethylformamide and 45g of xylene were mixed to give an emulsifiable concentrate (Reference EC 2) for the reference.

Two and a half grams (2.5g) of the oxazoline compound of the formula (2), 10g of Sorpol 3005X (surfactant produced by Toho Chemical), 40g of N,N-dimethylformamide and 47.5g of xylene were mixed to give an emulsifiable concentrate (Reference EC 3) for the reference.

Each of the emulsifiable concentrate prepared above was diluted with water 200 times.

In about $36m^2$ chicken house, a double deck rack was set for chicken cages. Each of 18 cages having a chicken was set on the upper deck and lower deck of the rack respectively. (36 chickens, 18 of which were in the upper deck and 18 were in the lower deck, were provided for the test.) Eighteen traps for chicken mites (*Dermanyssus gallinae*) were set between the upper deck and the cage. The traps were two opposite 15cm-square boards having 2mm interval. About 1000 chicken mites were released in the chicken house. After 14 days, the number of the chicken mites (including larvae, youths and adults) in the traps was counted and estimated by the standard described below.

Index 0: 0 surviving chicken mites
Index 1: 1-10 surviving chicken mites
Index 2: 11-50 surviving chicken mites
Index 3: 51-100 surviving chicken mites
Index 4: 101- surviving chicken mites

After confirming that all the traps have Index 4, each of the dilution prepared above was sprayed at 100ml per $1m^2$. The Indexes were observed 14 days after spraying. The results are given in Table 1. No treatment in the table was given by only water spraying. Controlling rate (%) was calculated by the following formula.

$$\text{Controlling rate (\%)} = (C - T) \div C \times 100$$

C: Average Index in No treatment
T: Average Index in tested area

Table 1

| | Average Index | Controlling rate (%) |
|---|---|---|
| EC 1 | 0.8 | 80.0 |
| Reference EC 2 | 2.9 | 27.5 |
| Reference EC 3 | 3.6 | 10.0 |
| No treatment | 4.0 | - |

As given by the table, EC 1 gave synergistic effect.

Industrial Applicability

The pesticidal composition of the present invention has an excellent efficacy against pests and useful for controlling pests.

## Claims

**1.** A pesticidal composition which comprises an ester compound of the formula (1):

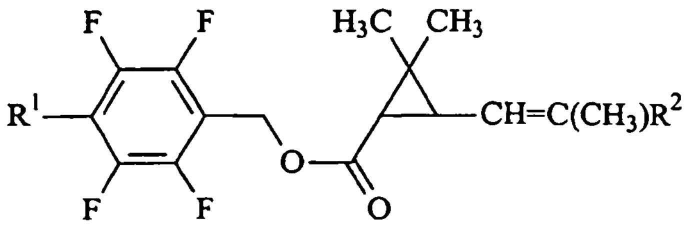 (1)

wherein $R^1$ represents a methyl group or methoxymethyl group and $R^2$ represents a hydrogen atom or methyl group, and an oxazoline compound of the formula (2):

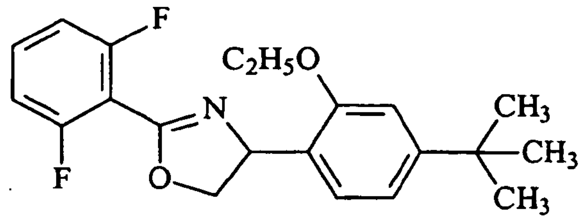 (2)

as active ingredients, wherein the weight ratio of the ester compound of the formula (1) and the oxazoline compound of the formula (2) is 30:1 to 1:30.

**2.** A pesticidal composition according to claim 1, wherein the weight ratio of the ester compound of the formula (1) and the oxazoline compound of the formula (2) is 10:1 to 1:10.

**3.** A method for controlling a pest which comprises applying an ester compound of the formula (1):

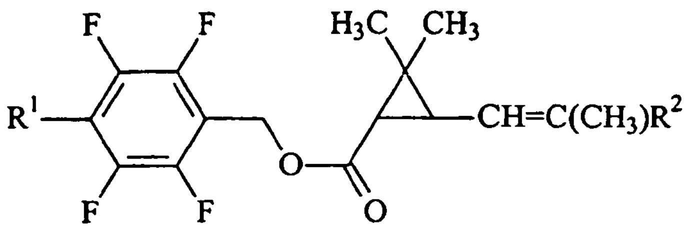 (1)

wherein $R^1$ represents a methyl group or methoxymethyl group and $R^2$ represents a hydrogen atom or methyl group, and an oxazoline compound of the formula (2):

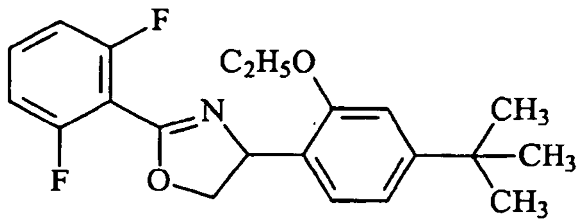 (2)

to the pest or a place where the pest inhabits, wherein the weight ratio of the ester compound of the formula (1) and the oxazoline compound of the formula (2) is 30:1 to 1:30.

4. The method for controlling a pest according to claim 3, wherein the weight ratio of the ester compound of the formula (1) and the oxazoline compound of the formula (2) is 10:1 to 1:10.

5. Use of a pesticidal composition according to claim 1 or claim 2 for controlling a pest.

**Patentansprüche**

1. Pestizide Zusammensetzung, welche eine Ester-Verbindung der Formel (1):

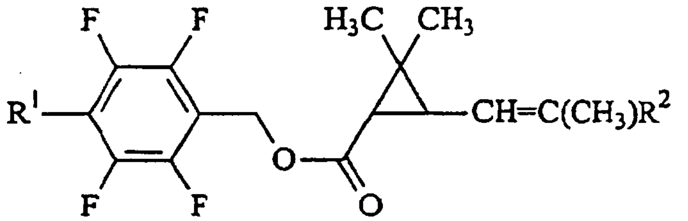
(1)

,

wobei $R^1$ eine Methyl- oder Methoxymethylgruppe und $R^2$ ein Wasserstoffatom oder eine Methylgruppe ist, und eine Oxazolin-Verbindung der Formel (2):

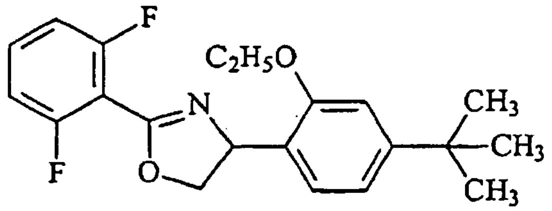
(2)

als Wirkstoffe umfasst, wobei das Gewichtsverhältnis der Ester-Verbindung der Formel (1) und der Oxazolin-Verbindung der Formel (2) 30:1 bis 1:30 ist.

2. Pestizide Zusammensetzung nach Anspruch 1, wobei das Gewichtsverhältnis der Ester-Verbindung der Formel (1) und der Oxazolin-Verbindung der Formel (2) 10:1 bis 1:10 ist.

3. Verfahren zur Bekämpfung eines Pflanzenschädlings, welches die Anwendung einer Ester-Verbindung der Formel (1):

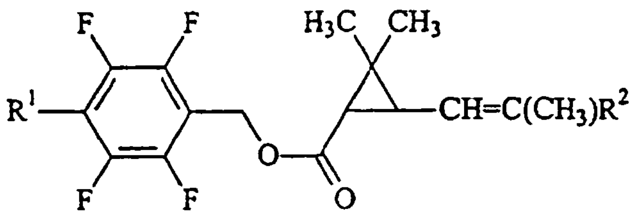
(1)

,

wobei $R^1$ eine Methyl- oder Methoxymethylgruppe und $R^2$ ein Wasserstoffatom oder eine Methylgruppe ist, und einer Oxazolin-Verbindung der Formel (2):

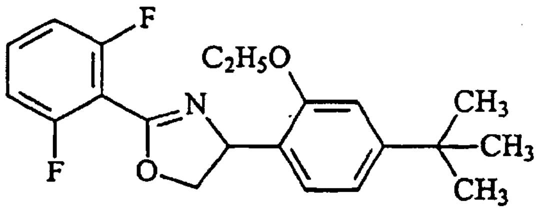

(2)

am Pflanzenschädling oder einem Ort, welchen der Pflanzenschädling bewohnt, umfasst, wobei das Gewichtsverhältnis der Ester-Verbindung der Formel (1) und der Oxazolin-Verbindung der Formel (2) 30:1 bis 1:30 ist.

4. Verfahren zur Kontrolle eines Pflanzenschädlings nach Anspruch 3, wobei das Gewichtsverhältnis der Ester-Verbindung der Formel (1) und der Oxazolin-Verbindung der Formel (2) 10:1 1 bis 1: 10 ist.

5. Verwendung einer pestiziden Zusammensetzung nach Anspruch 1 oder Anspruch 2 zur Bekämpfung eines Pflanzenschädlings.

**Revendications**

1. Composition pesticide qui comprend un composé de type ester de la formule (1) :

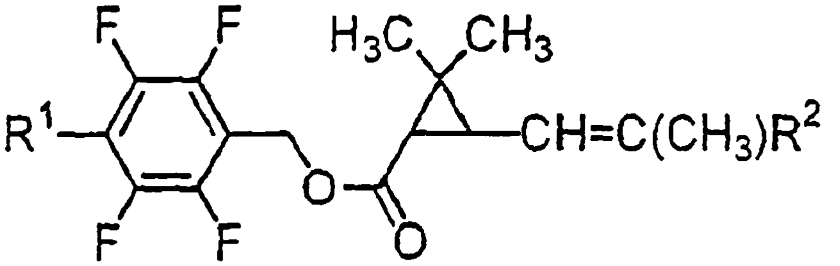

(1)

dans laquelle $R^1$ représente un groupe méthyle ou un groupe méthoxyméthyle et $R^2$ représente un atome d'hydrogène ou un groupe méthyle,
et un composé de l'oxazoline de la formule (2) :

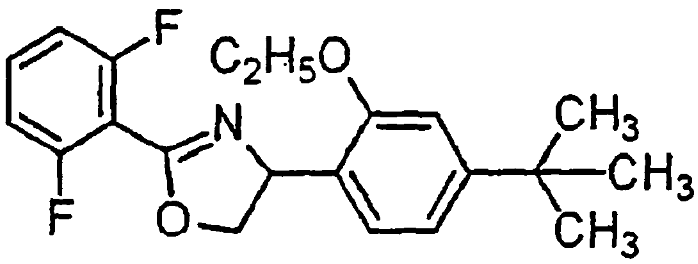

(2)

en tant qu'ingrédients actifs, dans laquelle le rapport pondéral du composé de type ester de la formule (1) et du composé de l'oxazoline de la formule (2) est de 30 : 1 à 1 : 30.

2. Composition pesticide selon la revendication 1, dans laquelle le rapport pondéral du composé de type ester de la formule (1) et du composé de l'oxazoline de la formule (2) est de 10 : 1 à 1 : 10.

3. Procédé pour le contrôle d'un organisme nuisible, qui comprend l'application d'un composé de type ester de la formule (1) :

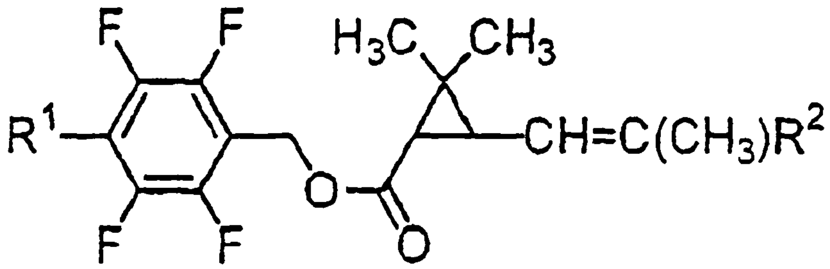

( 1 )

dans laquelle $R^1$ représente un groupe méthyle ou un groupe méthoxyméthyle et $R^2$ représente un atome d'hydrogène ou un groupe méthyle,
et un composé de l'oxazoline de la formule (2) :

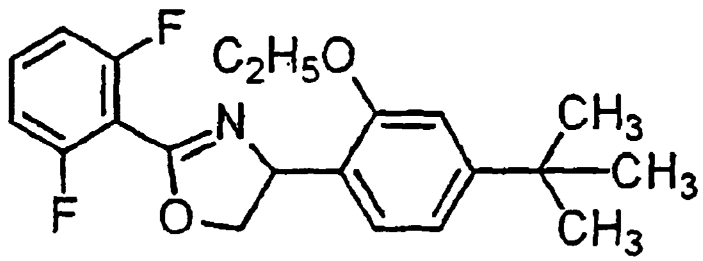

( 2 )

à l'organisme nuisible ou à un endroit où l'organisme nuisible réside, dans lequel le rapport pondéral du composé de type ester de la formule (1) et du composé de l'oxazoline de la formule (2) est de 30 : 1 à 1 : 30.

**4.** Procédé pour le contrôle d'un organisme nuisible selon la revendication 3, dans lequel le rapport pondéral du composé de type ester de la formule (1) et du composé de l'oxazoline de la formule (2) est de 10:1à1:10.

**5.** Utilisation d'une composition pesticide selon la revendication 1 ou la revendication 2 pour le contrôle d'un organisme nuisible.